Europäisches Patentamt

European Patent Office

Office européen des brevets

(19)

(11) Numéro de publication: **0 433 142 A1**

## (12) DEMANDE DE BREVET EUROPEEN

(21) Numéro de dépôt: **90403481.6**

(22) Date de dépôt: **06.12.90**

(51) Int. Cl.5: **G06F 15/16**

(30) Priorité: **11.12.89 FR 8916334**

(43) Date de publication de la demande:
**19.06.91 Bulletin 91/25**

(84) Etats contractants désignés:
**DE FR GB**

(71) Demandeur: **UNIVERSITE DE BRETAGNE OCCIDENTALE, ( BREST)**
**Rue des Archives**

**F-29269 Brest Cédex(FR)**

(72) Inventeur: **Pottier, Bernard**
**1 rue Avel Vor**
**F-29220 Saint Divy(FR)**

(74) Mandataire: **Rodhain, Claude et al**
**30, rue La Boétie**
**F-75008 Paris(FR)**

(54) **Système de traitement de données multiprocesseur à bus actif reconfigurable.**

(57) L'invention concerne un système de traitement de données multiprocesseur à bus actif reconfigurable.

Le système comprend au moins deux modules interconnectables (10A, 10B). Un module comprend une unité de traitement de données (20A), une unité de mémorisation (30A) et un socle (40A) partageant un bus système (50A). Le socle (40A) comprend un premier moyen interface d'entrée/sortie (41A) relié au bus système (50A), des seconds moyens interfa-ce d'entrée/sortie (42A, 44A) reliés à un bus d'inter-connexion de modules (60) pour relier au moins deux modules adjacents (10A, 10B), des moyens de synthèse d'une pluralité de cicuits opératoires (43A) et des moyens de création et de commutation de chemins de données (43A). Le socle (40A) utilise la technologie des tableaux de cellules logiques (LCA).

L'invention trouve notamment une application dans les systèmes de traitement de données multi-processeurs fonctionnant en parallèle.

FIG.1

## SYSTEME DE TRAITEMENT DE DONNEES MULTIPROCESSEUR A BUS ACTIF RECONFIGURABLE.

Le domaine de l'invention est celui des systèmes de traitement de données multiprocesseurs.

L'invention concerne un système de traitement de données multiprocesseur à bus actif reconfigurable.

Il est connu que les configurations à multiprocesseurs permettent de multiplier les capacités de traitement des systèmes de traitement de données, notamment en implantant des mécanismes de traitement de données en parallèle. Par ailleurs, les systèmes à architecture parallèle mettent en oeuvre diverses techniques de communication interprocesseurs.

Parmi celles-ci, on peut distinguer la voie de communication partagée, le contrôle de la voie de communication étant distribuée entre les processeurs communicants ou centralisé au niveau d'un dispositif de commande de voie de communication. On distingue aussi les réseaux de connexion processeur à processeur comme dans les hypercubes, "Tansputers", tableaux systoliques.

La voie de communication interprocesseurs consiste typiquement en un bus parallèle, les transferts de données s'effectuant depuis l'unité de mémorisation associée à un processeur vers l'unité de mémorisation associée à un processeur éloigné.

Les transferts de données interprocesseurs peuvent consister dans un mouvement de blocs importants de données mais aussi dans un mouvement d'une multiplicité de blocs de petite taille.

Les processeurs communicants ayant en charge la gestion des transferts de données et la gestion de la configuration de la voie de communication, il est connu que la capacité de traitement en parallèle du système est considérablement affectée par les transferts fréquents de données entre les processeurs.

Une solution à ce problème a été apportée par le brevet US-0 234182 (IBM) qui divulgue l'utilisation d'une mémoire à double accès permettant de tamponner les données à transférer via la voie de communication dans une première zone mémoire pendant que le processeur communicant continue un traitement en association avec une seconde zone mémoire.

Cependant, un autre inconvénient majeur des machines multiprocesseurs à traitement parallèle réside dans leur irrégularité de puissance de calcul vis-à-vis des différents domaines d'applications. Ainsi, les machines multiprocesseurs comportent en général des processeurs performants mais coûteux. Les machines massivement parallèles comportent au contraire une multiplicité de processeurs modestes. Les domaines d'applications de ces machines étant le plus souvent hétérogènes, de même que les algorithmes mis en oeuvre, notamment sur le plan des calculs arithmétiques, on obtient par conséquent une puissance de calcul non régulière pour l'une ou l'autre de ces deux catégories de machines. En conséquence, la rigidité de structure des systèmes actuels de traitements de données multiprocesseurs est complètement inadaptée au nombre considérable d'algorithmes qui doivent être mis en oeuvre où seul le nombre d'unités de calcul est un facteur déterminant et il est avantageux de disposer d'un système combinant intrinsèquement les qualités des machines multiprocesseurs et des machines à traitement parallèle. En particulier, le système de traitement de données à multiprocesseurs divulgué dans le brevet cité ci-dessus comporte un bus interprocesseur inerte qui ne procure aucune amélioration au niveau de la puissance de calcul de l'ensemble du système. Par ailleurs, ce type de systèmes connus a des caractéristiques temporellement figées et ne permet pas un couplage interprocesseurs flexible.

En conséquence, l'objectif de l'invention est de résoudre ces différents problèmes.

Notamment un premier objectif de l'invention est de fournir un système de traitement de données multiprocesseurs à bus actif reconfigurable permettant de répartir entre les processeurs et le bus actif, des classes d'algorithmes de traitements de données de manière à constituer un système modulaire possédant deux couches distinctes, une première couche constituée d'unités de traitements de données cascadées du type à multiples instructions, multiples données, par exemple, induisant un parallélisme à grain moyen et une seconde couche constituée de circuits contrôlés par des flots de données intégrant des fonctions de communication, de synchronisation et de calculs parallèles à grain fin, cette couche formant le bus actif reconfigurable.

Un autre objectif de l'invention est de fournir un système de traitement de données à bus actif reconfigurable, dans lequel le protocole de communication est géré directement au niveau de la voie de communication, c'est à dire au niveau du bus.

Un autre objectif de l'invention est de fournir un système de traitement de données à bus actif reconfigurable dans lequel on a découplé les fonctions de traitement de données gérées par les processeurs du système et les fonctions de gestion du protocole de communication interprocesseurs gérées par le bus actif permettant d'obtenir une vitesse de communication et une puissance de calcul en parallèle très élevées.

Ces objectifs ainsi que d'autres sont atteints à l'aide d'un système de traitement de données multiprocesseur à bus actif reconfigurable comprenant au moins deux modules interconnectables reliés par un bus d'interconnexion de modules, un module interconnectable comprenant une unité de traitement de données, une unité de mémorisation adressable et commandable par l'unité de traitement de données via un bus système,

caractérisé en ce que

ledit module comprend en outre un socle configurable et reconfigurable constituant un noeud du bus d'interconnexion de modules, ledit socle comprenant un premier moyen interface d'entrée/sortie relié au bus système et fonctionnant avec l'unité de traitement de données et l'unité de mémorisation, des seconds moyens interfaces d'entrée/sortie reliés au bus d'interconnexion de modules pour fonctionner respectivement avec les seconds moyens interface d'entrée/sortie du module adjacent, des moyens de synthèse d'une pluralité de circuits opératoires recevant des données d'entrée depuis lesdits moyens interface et restituant des données résultantes vers lesdits moyens interface, des moyens de création et de commutation de chemins de données entre lesdits moyens interface d'entrée/sortie, ledit socle étant configuré et reconfiguré par l'unité de traitement de données au moyen d'une information de configuration via le bus système.

Les moyens de synthèse de circuits opératoires dans le socle permettent une répartition de la puissance de calcul interne du module entre l'unité de traitement de données ou processeur et le socle ou noeud du bus de communication. Les moyens interface d'entrée/sortie en association avec les moyens de création et de commutation des chemins de données configurables permettent un routage flexible des données sur le bus indépendamment de l'activité de l'unité de traitement de données. Le socle étant configurable ou reconfigurable par le chargement d'une information de configuration, celui-ci se comporte comme un noeud intelligent de communication intermodules. On obtient ainsi un gain important au niveau des opérations de contrôle, de test ou de distribution des données gérées antérieurement par les processeurs du système.

Selon une autre caractéristique de l'invention, l'unité de mémorisation comprend une première zone de mémorisation et une seconde zone de mémorisation, des moyens de transfert de données entre les deux zones de mémorisation, la première zone de mémorisation et les moyens de transfert étant adressables et commandables via le bus système par l'unité de traitement de données, la seconde zone de mémorisation et les moyens de transfert étant accessibles et commandables via un canal de communication par le socle comprenant en outre un troisième moyen interface d'entrée/sortie fonctionnant avec les moyens de création et de commutation de chemins de données.

Grâce au partitionnement de l'unité de mémorisation et à son double accès, on réalise un véritable bouclage entre l'unité de traitement de données, le socle et l'unité de mémorisation. De cette manière on obtient un recouvrement des tâchez réalisées au niveau de l'unité de traitement de données et du socle. La mémoire partitionnée à double accès permet un gain en bande passante et en opérations de contrôle. Le bouclage assure une diffusion des données à travers les canaux internes du module sans interrompre les traitements locaux en cours.

D'autres caractéristiques et avantages de l'invention seront encore mieux compris à la lecture de la description qui va suivre et des dessins annexés dans lesquels :

- la figure 1 représente schématiquement un système de traitement de données multiprocesseur à bus actif reconfigurable comportant des modules interconnectables selon l'invention,

- la figure 2 représente schématiquement le système de traitement de données multiprocesseur à bus actif reconfigurable selon l'invention dans lequel chaque module comporte une mémoire à double accès.

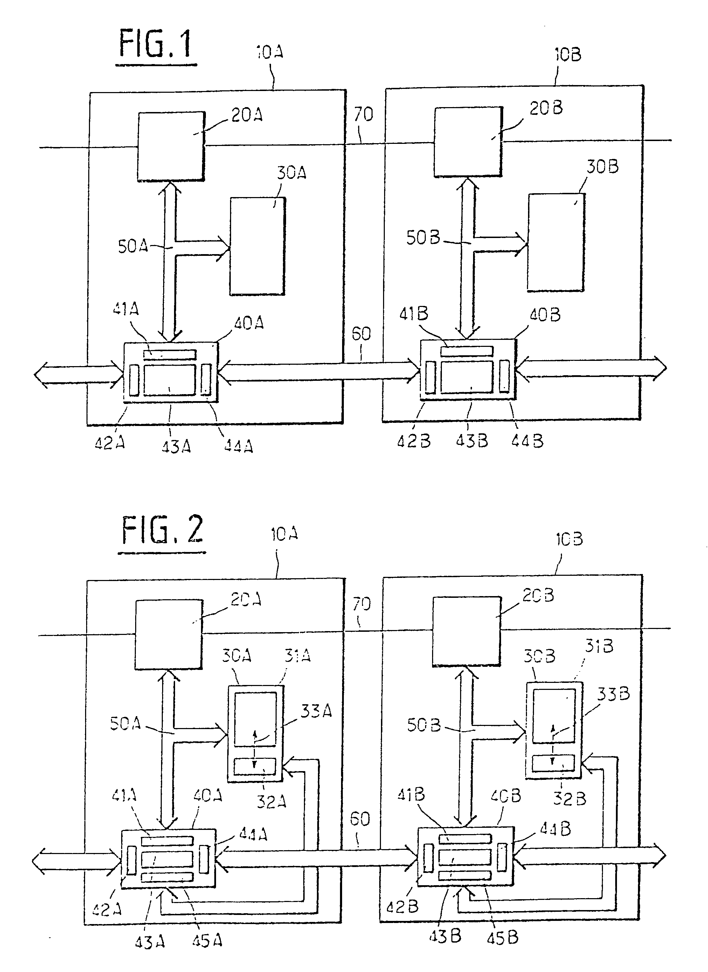

Le système de traitement de données multiprocesseur illustré en figure 1, comprend deux modules 10A, 10B interconnectables. Le premier module comprend de façon typique une unité de traitement de données 20A ou processeur, une unité de mémorisation de données et de programme 30A reliée à l'unité 20A par un bus système 50A comportant de façon connue, des fils d'adresse et de contrôle de manière que l'unité de traitement de données est à même d'adresser et de commander l'unité de mémorisation.

De façon similaire, le second module 10B comporte une unité de traitement de données 20B reliée à une unité de mémorisation de données et de programme 30B via un bus système 50B. Les deux unités de traitement de données 20A, 20B sont cascadées et reliées par un réseau de communication 70 de façon à assurer un couplage faible entre eux. Bien entendu, on pourra prévoir la connexion en cascade d'autres unités de traitement de données, de façon à réaliser un système comportant une pluralité de processeurs. Les processeurs peuvent s'apparenter à des Transputers induisant un parallélisme à grain moyen.

Le module 10A comprend en outre un socle 40A placé en un noeud d'un bus d'interconnexion intermodules 60. Il en est de même pour le module 10B et nous ne décrirons par la suite que le module 10A.

Le socle 40A selon l'invention est basé sur la technologie d'un tableau de cellules logiques communément appelé LCA (Logic Cells Array). Le LCA contient trois types d'éléments ; un périmètre de blocs d'entrée/sortie, un tableau central de blocs logiques configurables et des ressources d'interconnexion de blocs.

La configuration des trois types d'éléments est déterminée par une information de configuration préalablement chargée dans le LCA, lequel est basculé à cet effet dans un mode configuration. De tels circuits sont disponibles dans le commerce sous la référence AMD 3090 par exemple.

Selon l'invention, on utilise une pluralité de blocs d'entrée/sortie du LCA pour constituer une première interface d'entrée/sortie parallèle 41A comportant de préférence 32 blocs d'entrée/sortie de données et 4 blocs d'entrée/sortie affectés à des lignes de contrôle, la première interface d'entrée/sortie parallèle 41A étant directement reliée au bus système 50A de manière que le socle 40A pourra être adressable et commandable via le bus système 50A par l'unité de traitement de données 20A. On utilise de façon similaire une pluralité d'autres blocs d'entrée/sortie du LCA pour constituer deux seconds moyens interface d'entrée/sortie parallèles 42A, 44A par exemple deux fois 36 blocs pour relier au moins un module adjacent 10B au module 10A via le bus d'interconnexion de modules 60 et fonctionner respectivement avec les seconds moyens interface d'entrée/sortie 42B, 44B associés au second module adjacent.

De façon préférentielle, le bus d'interconnexion de modules 60 comporte 32 lignes de transmission de données et 4 lignes de commande. Cependant, on pourra prévoir une organisation et une utilisation différentes des différentes lignes du bus d'interconnexion en fonction de la configuration des blocs d'entrée/sortie du LCA.

Le tableau central de blocs logiques configurables permet la synthèse de circuits opératoires 43A par exemple de fonctions logiques ou arithmétiques définie par le chargement de tables de scrutation internes au LCA.

Les circuits opératoires selon leur configuration mettent en oeuvre des algorithmes de traitements en parallèle. Le cheminement des données a travers les circuits opératoires synthétisés et entre les différents moyens interfaces d'entrée/sortie 41A, 42A, 44A est obtenu par la configuration des ressources d'interconnexion 43A du LCA permettant la création ou la modification de liens entre les blocs logiques du LCA. Les circuits opératoires sont pilotés par le flux de données provenant des moyens interface d'entrée 41A, 42A, 44A et les résultats des traitements sont aiguillés vers les moyens interface de sortie 41A, 42A, 44A de manière que le socle 40A constitue à lui seul un pseudo processeur a traitement de données en parallèle à grain fin.

Le cheminement des données depuis et vers les moyens d'interface d'entrée/sortie 41A, 42A, 44A et la constitution des circuits opératoires sont définis par une information de configuration du socle 40A. L'information de configuration préalablement mémorisée dans l'unité de mémorisation 30A est chargée dans le socle 40A de manière connue via le bus système 50A à l'initiative de l'unité de traitement de données 20A et est modifiée de la même manière pour reconfigurer le socle 40A selon le traitement ou les aiguillages de données à réaliser. On pourra prévoir à l'initialisation du système de traitement de données multiprocesseur de charger l'ensemble des informations de configurations respectivement dans les unités de mémorisation 30A, 30B associées a chaque module 10A, 10B depuis un site externe via le réseau interprocesseur 70.

En phase de fonctionnement du système selon l'invention, chaque unité de traitement 20A peut configurer son socle associé 40A pour, d'une part établir logiquement les chemins de transfert des données via le bus d'interconnexion de modules 60, et d'autre part, synthétiser les circuits opératoires à fonctionnement parallèle ou non afin de déporter une partie de leur puissance de calcul

Le socle 40A joue ainsi le rôle d'un accélérateur de l'unité de traitement de données 20A et permet d'établir de façon flexible un chemin de diffusion de données globales à l'ensemble des unités de traitement de données du système.

Dans le cas d'une écriture vers l'unité de mémorisation 30A des résultats délivrés par les circuits opératoires d'un socle 40A, le socle 40A réquisitionne l'accès du bus système 50A et par conséquent affecte la capacité de traitement de l'unité de traitement de données 20A qui partage le bus système 50A. Il est donc avantageux d'alimenter directement les circuits opératoires synthétisés du socle 40A sans réquisitionner le bus système 50A.

De façon préférentielle, et comme visible en figure 2, l'unité de mémorisation 30A est une mémoire vidéo (VRAM) du type TMS44 C251 de chez Texas Instruments et compórte une première zone de mémorisation 31A, une seconde zone de mémorisation 32A et des moyens de transfert de données 33A caractéristique de la vidéo RAM permettant l'échange de données entre les deux zones de mémorisation. Plus spécifiquement, la première zone de mémorisation 31A est constituée d'une zone RAM associée à un port d'entrée/sortie parallèle accédé et commandé par l'unité de traitement de données 20A, via le bus système 50A. La seconde zone de mémorisation 32A est constituée d'un assemblage de registres série associés à un port d'entrée/sortie série accédé et commandé par le socle 40A via un canal de communication 75A reliant le port d'entrée/sortie associé à la seconde zone de mémorisation 32A à un troisième moyen interface d'entrée/sortie 45A correspondant du socle 40A constitué par une pluralité de blocs d'entrée/sortie du LCA. Parmi les lignes du canal de communication 75A, le socle 40A pourra utiliser une ligne de requête pour lire séquentiellement les données mémorisées dans le port d'entrée/sortie série de la vidéo RAM ou venir y ranger des données.

L'unité de traitement de données 20A via le bus système 50A commande, de façon connue, le moyen de transfert de données 33A pour transférer des données mémorisées dans la première zone mémoire 31A vers la seconde zone mémoire 32A pour alimenter le socle 40A et inversement le socle 40A commande le moyen de transfert de données 33A via le canal de communication 75A, pour transférer des données mémorisées dans la seconde zone mémoire 32A vers la première zone mémoire 31A pour alimenter l'unité de traitement de données 20A.

Selon un mode de fonctionnement du système selon l'invention mettant en oeuvre deux modules 10A, 10B interconnectés par le bus d'interconnexion 60, l'unité de traitement de données 20A transfère en parallèle depuis la première zone de mémorisation 31A de l'unité de mémoire 30A, quatre opérandes vers le premier moyen interface configuré en entrée 41A du socle 40A. Les moyens de synthèse de circuits opératoires 43A étant configurés pour réaliser quatre opérations en parallèle, les quatre opérandes sont envoyés respectivement aux circuits opératoires synthétisés 43A qui peuvent délivrer simultanément quatre résultats au second moyen interface configuré en sortie 44A du socle 40A, lesquels les transfèrent vers le second moyen interface configuré en entrée 42B du socle 40B du module 10B. Le socle 40B préalablement configuré pour établir des liens de communication de données entre le second moyen interface d'entrée 42B et le troisième moyen interface configuré en sortie 45B transfère les données résultantes à destination de la seconde zone de mémorisation 32B de l'unité de mémorisation 30B du module 10B. Le socle 40B provoque le transfert de données depuis la seconde zone de mémorisation 32B vers la première zone de mémorisation 31B. L'unité de traitement de données 20B accède ensuite aux données chargées dans la première zone de mémorisation 32B pour terminer le traitement.

Ainsi, comme décrit précédemment, on obtient un recouvrement partiel entre le calcul d'adressage effectué au niveau des unités de traitement de données 20A, 20B, et les calculs et les transferts réalisés au niveau des socles 40A, 40B.

On peut bien entendu optimiser les temps de traitement du système en configurant par exemple le socle 20A en lecture directe du bus système 60.

On voit donc que le bus d'interconnexion de module selon l'invention est à la fois un canal de traitement et un canal de communication permettant l'implantation d'un parallélisme pouvant être très fin ou d'algorithmes distribués. Le système selon l'invention peut être considéré comme une couche de processeurs conventionnels (MIMD) contrôlant une couche de circuits combinatoires ou séquentiels reconfigurables selon les besoins de l'application.

Enfin, le système de traitement de données multiprocesseur à bus actif reconfigurable présente l'intérêt d'être facilement extensible. En interconnectant une pluralité de modules selon l'invention, il est facile par exemple de mettre en oeuvre des algorithmes de diffusion de messages via le bus d'interconnexion ou de configurer le socle de chaque module en crossbar comme dans les machines systoliques.

Bien entendu l'invention n'est pas limitée à l'exemple de réalisation ci-dessus décrit et on pourra prévoir d'autres variantes sans pour cela sortir du cadre de l'invention.

**Revendications**

1.  Système de traitement de données multiprocesseur à bus actif reconfigurable comprenant au moins deux modules interconnectables (10a, 10b) reliés par un bus d'interconnexion de modules (60), un module interconnectable (10a) comprenant une unité de traitement de données (20a), une unité de mémorisation (30a) adressable et commandable par l'unité de traitement de données via un bus système (50a),
    caractérisé en ce que
    ledit module (10a) comprend en outre un socle configurable et reconfigurable (40a) constituant un noeud du bus d'interconnexion de modules, ledit socle (40a) comprenant un premier moyen interface d'entrée/sortie (41a) relié au bus système (50a) et fonctionnant avec l'unité de traitement de données (20a) et l'unité de mémorisation (30a), des seconds moyens interfaces d'entrée/sortie (42a, 44a) reliés au bus d'interconnexion de modules (60) pour fonctionner respectivement avec les seconds moyens d'interface d'entrée/sortie du module adjacent (10b), des moyens de synthèse d'une pluralité de circuits opératoires (43a) recevant des données d'entrée depuis lesdits moyens d'interface (41a, 42a, 44a) et restituant des données résultantes vers lesdits moyens d'interface, des moyens de création et de commutation de chemins de données (43a) entre lesdits moyens d'interface d'entrée/sortie (41a, 42a, 44a), ledit socle étant configuré et reconfiguré par l'unité de traitement de données (20a) au moyen d'une information de configuration via le bus système (50a).

2. Système de traitement de données multiprocesseur à bus actif reconfigurable selon la revendication 1, caractérisé en ce que l'unité de mémorisation (30a) comprend une première zone de mémorisation (31a) et une seconde zone de mémorisation (32a), des moyens de transfert de données (33a) entre les deux zones de mémorisation, la première zone de mémorisation et les moyens de transfert étant adressables et commandables via le bus système (50a) par l'unité de traitement de données (20a), la seconde zone de mémorisation et les moyens de transfert étant accessibles et commandables via un canal de communication (75a) par le socle (40a) comprennant en outre un troisième moyen interface d'entrée/sortie (45a) fonctionnant avec les moyens de création et de commutation de chemins de données (43a).

FIG.1

FIG.2

# RAPPORT DE RECHERCHE EUROPEENNE

**EP 90 40 3481**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 411 443 (CII-HONEYWELL BULL) <br> * le document en entier * | 1 | G 06 F 15/16 |
| A | FR-A-2 352 340 (HONEYWELL INFORMATION SYSTEMS INC.) <br> * le document en entier * | 1 | |
| A | IBM TECHNICAL DISCLOSURE BULLETIN. vol. 29, no. 6, novembre 1986, NEW YORK US pages 2519 - 2523; "DYNAMICALLY RECONFIGURABLE MICROPROCESSING SYSTEM" <br> * le document en entier * | 1 | |
| A | COMPUTER TECHNOLOGY REVIEW. vol. VII, no. 13, 1987, LOS ANGELES US pages 24 - 29; R. FINGER: "The Interconnect Space Of Multibus II Simplifies Hardware/Software Use" <br> * le document en entier * | 1 | |

| | DOMAINES TECHNIQUES RECHERCHES (Int. Cl.5) |
|---|---|
| | G 06 F |

Le présent rapport de recherche a été établi pour toutes les revendications

| Lieu de la recherche | Date d'achèvement de la recherche | Examinateur |
|---|---|---|
| Berlin | 31 janvier 91 | DURAND J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant